# EUROPEAN PATENT APPLICATION

(11) **EP 4 613 540 A1**
(43) Date of publication of application: **10.09.2025**
(21) Application number: 25161336.0
(22) Date of filing: 03.03.2025
(51) Int. Cl.: B60L 53/10, B60L 53/20, B60L 53/30, B60L 1/00, B60L 3/04, B60L 50/50, B60L 53/00, B60L 53/14, B60L 53/22, H02J 7/00, H02J 7/34

(54) **ELECTRICALLY POWERED TRUCK WITH IMPROVED CHARGING FUNCTION**

(30) Priority: 07.03.2024 IT 202400005149
(71) Applicant: Toyota Material Handling Manufacturing Italy S.p.A, 40132 Bologna (IT)
(72) Inventor: Foligno, Andrea, Bologna (IT); Ferrari, Paolo, Bologna (IT)
(74) Representative: Hoffmann Eitle

(57) **Abstract**

"information on abstract not available"

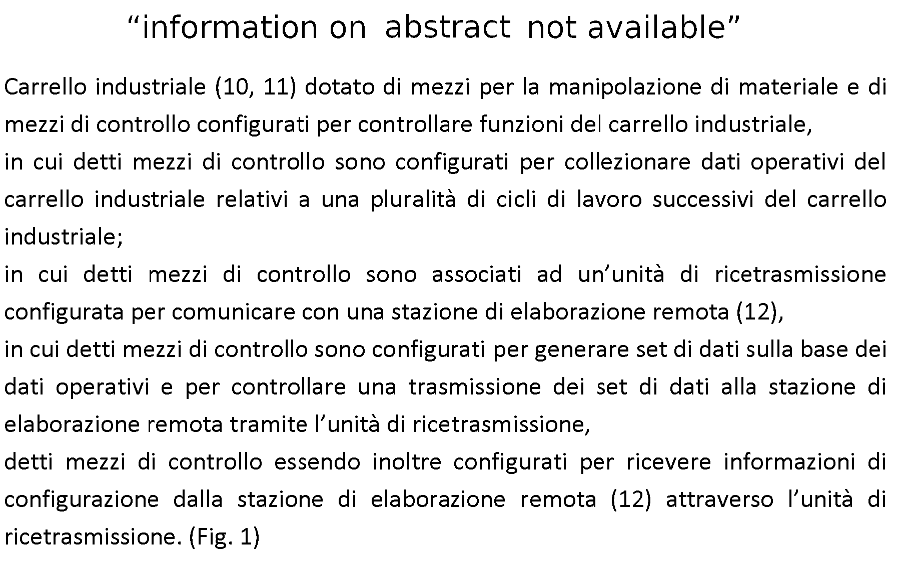

## Description

### Field of the invention

The present invention relates to an electrically powered industrial truck, in particular provided with an improved charging function.

### Technical background

It is known in the art to make industrial trucks provided with material handling means, such as a forklift, which can be used for example in an industrial site, a warehouse, a port or the like. Recently, electrically powered industrial trucks have spread, i.e. equipped with a battery capable of powering the main functions of the industrial truck as locomotion and/or material handling.

Electrically powered trucks (or electric trucks) must be unable to move during the battery charging phase, to avoid dangers to people and things. To ensure this, typically the operator manually removes the battery plug, physically disconnecting the power from the truck utilities and, therefore, no longer allowing the machine to move. After charging, the plug is reinserted and the machine is unlocked.

A second problem associated with this type of truck is that of the safety in the connection, which is particularly critical for on-board chargers. In fact, since it is by its nature subject to stresses during the operation of the machine (something that the external 'wall' chargers are not), the probability of damage to the on-board charger is greater. In addition, the on-board charger is integrated into the truck, which often implies the absence or in any case the impossibility of accessing a display that shows its operating status. It is understandable how the current solutions are not completely problem-free, especially with regard to the versions with on-board chargers.

### Summary of the invention

An aim of the present disclosure is to obviate the above-mentioned problems. In light of this aim, the present disclosure provides an electrically powered industrial truck comprising an electrical energy storage system, operative means which can be powered by the energy storage system and control means; said industrial truck including a first power-supply line which connects the energy storage system and the operative means, wherein a first switch is inserted on the first power-supply line to cut off or enable the supplying of electrical energy to the operative means under the control of the control means; said industrial truck comprising a second power-supply line which connects the energy storage system to a charging connector for connection with a charging plug, wherein a second switch is inserted on the second power-supply line to cut off or enable the supplying of electrical energy from the charging connector to the energy storage system under the control of the control means.

Preferably, the energy storage system is integrated into the industrial truck irremovably from the industrial truck.

Preferably, the industrial truck further comprises an on-board charging device inserted on the second power-supply line, said on-board charger being configured to convert a mains voltage into a voltage that can be applied to the energy storage system to charge it.

Preferably, the industrial truck comprises a bus to which the on-board charger and the control means are connected.

Preferably, the industrial truck comprises a bus to which the control means are connected, the truck comprising communication means configured to put an external charger and the control means in communication via the bus when the charging plug is inserted into the charging connector.

Preferably, the control means are configured to establish whether the industrial truck is in a charging state or not, said control means being further configured to put the first switch into a closing state and the second switch into an opening state when they determine that the industrial truck is not in a charging state.

Preferably, the control means are configured to establish whether the industrial truck is in a charging state or not, said control means being further configured to put the second switch into a closing state and the first switch into an opening state when they determine that the industrial truck is in a charging state.

Preferably, the industrial truck further comprises a sensor configured to detect a positioning of the charging plug coupled to the charging connector, wherein said control means are connected to said sensor and they are configured to establish whether the industrial truck is in a charging state or not based on a signal received by the sensor.

Preferably, the on-board charger is configured to show its presence on the bus only when energised through energy coming from the charging connector, the control means are configured to detect the presence of the on-board charger on the bus, wherein said control means are configured to establish whether the industrial truck is in a charging state or not through detection of the presence of the on-board charger on the bus.

Preferably, the control means are configured to determine that the on-board charger has a malfunction if the sensor detects the coupling of the charging plug in the charging connector and the on-board charger is not detected as present on the bus.

Preferably, the industrial truck can be recharged using an external charger configured to convert a mains voltage into a voltage that can be applied to the energy storage system to charge it, wherein the external charger can be connected using the coupling of the charging plug in the charging connector to an on board machine bus to which the control means are connected, wherein the control means are configured to determine that the external charger has a malfunction if the sensor detects the coupling of the charging plug in the charging connector and the external charger is not detected as present on the bus.

Preferably, the operative means includes one or more of: a drive system for the industrial truck and a system for handling a load.

Preferably, the industrial truck further comprises a sensor configured to detect a positioning of the charging plug coupled to the charging connector, wherein said control means are connected to said sensor and they are configured to establish whether the industrial truck is in a charging state or not based on a signal received by the sensor, said control means being further configured to put the second switch into a closing state and the first switch into an opening state when they determine that the industrial truck is in a charging state.

Preferably, the control means are configured to detect the presence of the on-board charger on the bus when the on-board charger is energised through energy coming from the charging connector, wherein said control means are configured to establish whether the industrial truck is in a charging state or not through detection of the presence of the on-board charger on the bus, said control means being further configured to put the second switch into a closing state and the first switch into an opening state when they determine that the industrial truck is in a charging state.

The present disclosure allows, among other things, to provide a system that allows facilitating the charging operations of the battery of the electrically powered industrial truck, while increasing the safety of use of the truck.

By using a driven system for opening and closing the electrical power-supply lines for charging the battery and for supplying power to the truck functions, the operator is saved from having to carry out two manual operations of physical disconnection (and subsequent connection), which is even more burdensome when there is a door or compartment to be opened for access to the plug.

In addition, it is no longer necessary to provide a manoeuvring space to allow the operator to access the plug and be able to disconnect it. In particular, for the versions with on-board chargers, this problem of manoeuvring space is even more felt given that the charger, being integrated, can present additional access problems. The risk of accidental damage due to breakages of the charger is also avoided. The system provides for the use of a dedicated power line that physically prevents the transfer of energy from the charger to the battery or machine in the event of a malfunction.

### Brief description of the drawings

The present invention will be illustrated with reference to exemplary embodiments described with reference to the accompanying drawings.

In the drawings:
- figure 1 illustrates a view of an industrial truck according to the present disclosure;
- figure 2 illustrates a schematic view of the control means and of the power circuit of the industrial truck in an embodiment with on-board charger;
- figure 3 illustrates a schematic view of an on-board machine bus and of devices connected thereto;
- figure 4 illustrates a schematic view of the control means and of the power circuit of the industrial truck in an embodiment with external charger;
- figure 5 illustrates a sequence of operations implemented by the control means of the industrial truck according to an embodiment.

### Detailed description

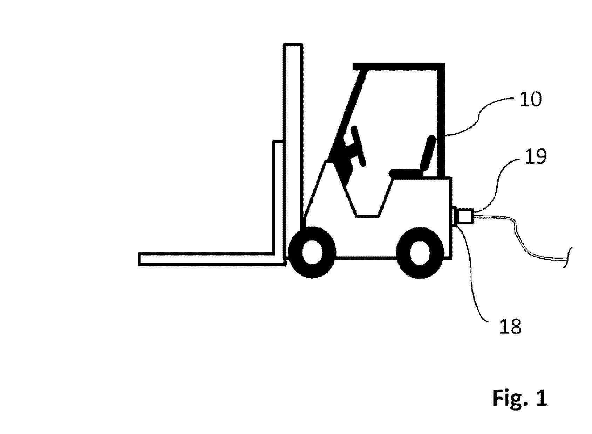

With reference to the figures, an electrically driven, or electrically powered, industrial truck 10 according to the present disclosure is shown in figure 1. The industrial truck 10 may for example be a forklift truck. The industrial truck 10 could advantageously be a counterbalanced truck. Another type of industrial truck could also be realized according to the present disclosure. In general, the industrial truck can include material handling means; the material handling means can for example include a mast along which a material gripping device, such as a fork, a gripper, or other known devices, can slide in a substantially vertical direction. For example, the industrial truck 10 may be employed at industrial sites, warehouses, ports, airports, logistics hubs, or the like. The electrically powered industrial truck 10 can be of the hybrid type (i.e. equipped with a traction or drive system that includes at least one electric motor and at least one combustion engine), or it could be completely electric (therefore with a traction system that does not include a combustion engine and instead includes only one or more electric motors). The electrically powered industrial truck 10 is provided with an electrical energy storage system 11 intended to supply electrical power to a primary function of the industrial truck, such as for example the drive function and/or the material handling function.

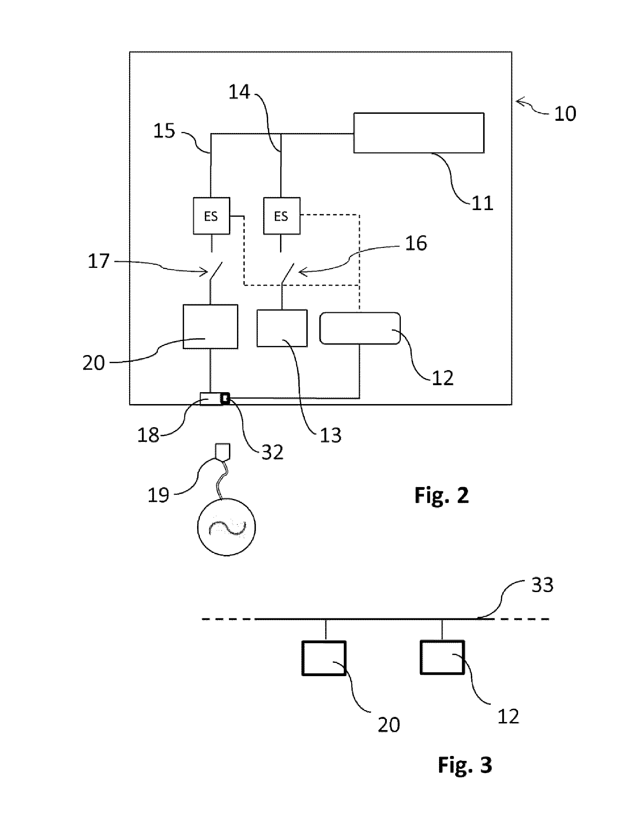

With reference to figure 2, the industrial truck 10 which comprises the electrical energy storage system 11, operative means 13 which can be powered by the energy storage system 11 and control means 12 is schematically shown. The electrical energy storage system 11 may comprise, or consist of, any battery system or electrical energy storage system, such as for example a lithium, lead acid, or other types of battery, or a combination of a plurality of battery modules or packs of any type according to the known art. The operative means 13 may include one or more of: a drive system for the industrial truck and a system for handling a load.

The industrial truck 10 includes a first power-supply line 14 which connects the energy storage system 11 and the operative means 13. A first switch 16 is inserted on the first power supply line 14 to cut off or enable the supplying of electrical energy to the operative means 13 under the control of the control means 12.

The industrial truck 10 further includes a second power-supply line 15 which connects the energy storage system 11 to a charging connector 18 for connection with a charging plug 19. The charging connector 18 may for example be formed on a body of the industrial truck to be accessible from the outside and be connected to the plug 19, which may in turn be connected to an electrical power cable. The plug 19 may be connected to an electrical distribution grid, for example low-voltage mains. A second switch 17 is inserted on the second power-supply line 15 to cut off or enable the supplying of electrical energy from the charging connector 18 to the energy storage system 11 under the control of the control means 12. For example, the first and second switches may be realized with a remote switch.

In a preferred embodiment, the energy storage system 11 is integrated into the industrial truck irremovably from the industrial truck. However, the present disclosure can also be applied to the case where the energy storage system 11 is removable from the industrial truck, for example through a side opening in the frame of the truck.

In one embodiment, as shown in figure 2, the industrial truck 10 comprises an on-board charging device 20 inserted on the second power-supply line 15. The on-board charger 20 is configured to convert a mains voltage into a voltage that can be applied to the energy storage system 11 to charge it. For example, the charger 20 can be realized with a mains low-voltage input, for example 380 V or 220 V in alternating current. The charger 20 may be realized with an output towards the battery 11 at a direct voltage, for example 48 V. The charger 20 may include a converter, a transformer and/or any combination of such electrical components.

In one embodiment, the industrial truck 10 comprises an on board machine bus 33, which can be realized with any technology known in the field, for example a CAN or Ethernet bus. One or more control devices of the industrial truck are connected to the bus 33. In one embodiment, the control means 12 and the on-board charger 20 are connected to the bus (see figure 3). Other devices (or control boards) can also be connected to control the various functions of the industrial truck.

The control means 12 are schematically represented with a single block in a logical representation of such means. However, the control means 12 may be realized with one or more control devices connected to a bus of the industrial truck, for example a plurality of control boards; the control means 12 may have a centralized or distributed architecture; the control means may include one or more software and/or hardware modules configured to implement one or more of the functions described therein. In one embodiment, the control means 12 having the function of controlling the switches 16, 17 can be realized by an MCB, main control board, or even in another control board of the truck, or even a dedicated control board. The present disclosure is in no way limited by the type of implementation of the control means. In an alternative version, the control logic (i.e. the control means) manage only the system 11 and are not integrated into the control means of the industrial truck.

As shown in figure 2, the on-board charger 20 may be electrically connected between the connector 18 and the switch 17, but another configuration would also be possible.

In one embodiment, the control means 12 are configured to establish whether the industrial truck is in the charging state or not. The detection of the charging state can be carried out both through detection of the charger 20 on the communication bus 33, and through detection of the connection of the charging plug 19 (for example by means of a sensor on the industrial truck or on the plug itself). For example, the industrial truck 10 may include a sensor 32 configured to detect a positioning of the charging plug 19 coupled to the charging connector 18. The control means 12 are advantageously connected to said sensor 32 and are configured to establish whether the industrial truck is in a charging state or not based on a signal received by the sensor 32. Alternatively, the control means 12 may be configured to detect energisation of a portion of a power circuit through a special sensor associated with the power circuit of the truck.

The control means 12 are configured to put the first switch 16 into a closing state and the second switch 17 into an opening state when it is determined that the industrial truck is not in a charging state. Further, the control means 12 are configured to put the second switch 17 into a closing state and the first switch 16 into an opening state when it is determined that the industrial truck is in a charging state.

In a preferred embodiment, the on-board charger 20 is configured to show its presence on the bus 33 only when energised through energy coming from the charging connector 18, for example by sending a message of presence on the bus. In this case, the control means 12 are configured to establish whether the industrial truck 10 is in the charging state or not through detection of the presence of the on-board charger 20 on the bus 33. The control means 12 are configured to determine that the on-board charger 20 has a malfunction if the sensor 32 detects the coupling of the charging plug 19 in the charging connector 18 and the on-board charger 20 is not detected as present on the bus 33.

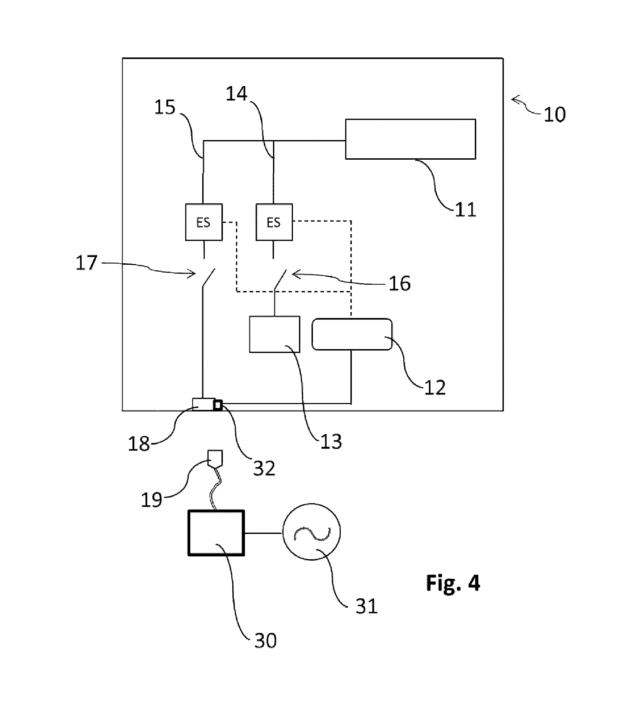

In an alternative embodiment, the charger is not on-board, as described above, but it is external to the industrial truck 10, as depicted in Figure 4. The elements of figure 4 are similar to those described with reference to figure 3 and bear the same reference number, wherein the embodiment of figure 4 differs from that of figure 3 in that the on-board charger 20 is absent and an external charger 30 is present. In such a case, the industrial truck can be recharged using the external charger 30 configured to convert a mains voltage (for example supplied by an energy distribution grid 31) into a voltage that can be applied to the energy storage system 11 to charge it. The external charger 30 can be connected by coupling the charging plug 19 in the charging connector 18 to an on board machine bus to which the control means 12 are connected. The control means 12 are configured to determine that the external charger 30 has a malfunction if the sensor detects the coupling of the charging plug 19 in the charging connector 18 and the external charger is not detected as present on the bus.

In a preferred embodiment, the industrial truck includes means for putting a controller of the truck (which may correspond to the control means 12) in communication with a charger of the industrial truck, both in the case where the charger is on-board and in the case where it is an external charger. The means for putting the control means and the charger in communication may include an on board machine bus. In the case where the charger is external, the means for putting the control means and the charger in communication may include the plug and the connector for connecting the charger to the power line of the truck. The means for putting into communication can be wired. The means for putting into communication enable to monitor the status of the charger in an easy way. The controller is able to detect an operating state of the charger based on a communication or a lack of communication with the charger via the bus.

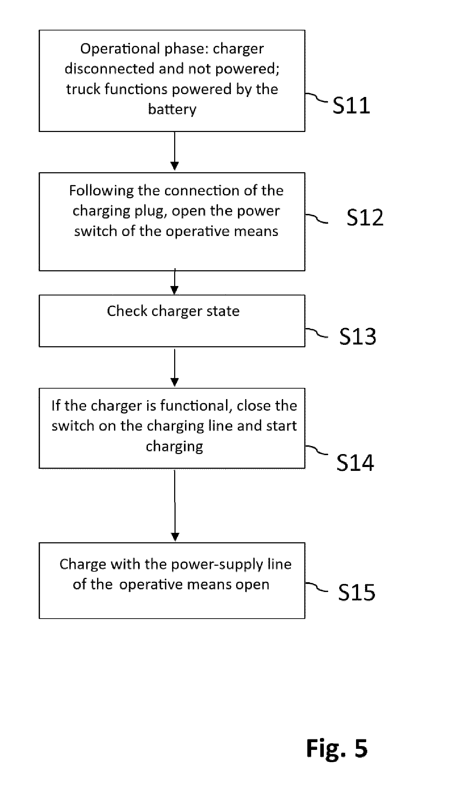

In this disclosure it is possible to distinguish two phases of operation of the machine: operational or working phase (use of the industrial truck) and charging phase. By using, for these two phases, two power lines 14, 15 which are separated but driven by a logic unit 12 (control means) integrated into the machine 10, it is possible to manage the transitions between these two phases with greater safety and simplicity, especially in relation to the greater risks related to the on-board charger. According to an operation of the industrial truck 10, the control means 12 are configured to perform the following steps, as depicted in figure 5:
S11: During the operational phase, in the case of on-board charger 20, it is not connected to the machine and it is not even powered; the battery 11 powers the functions of the industrial truck, such as the traction system and/or the system for handling the material.

S12: When the operator starts a charge, he only has to connect the plug 19 to the connector 18. At this point, the logic (i.e. the control means 12) manages the transition by first opening the line of the machine, i.e. the power-supply line 14 though the switch 16.

S13: Subsequently, the control means 12 check whether the charger 20 is operational (presence on the bus) and fully functional (absence of errors).

S14: Only if the charger 20 is operational (presence on the bus) and fully functional (absence of errors), the control means 12 electrically close the power line 15 (thus the switch 17) and the charging of the battery 11 can start. Otherwise, a malfunction notification signal is issued and the switch 17 is not closed.

S15: During charging, the industrial truck 10 is completely safe since the power line that powers it is de-energised.

When the operator disconnects the charging plug, the transition towards the operational phase begins.

The logic (i.e. the control means 12) recognizes the disconnection of the plug and/or the disappearance of the charger from the bus. The driving of the charging line is then first opened and, subsequently, the line of the machine is closed. All this happens automatically, without further operations by the operator.

In light of the foregoing, it is apparent that the present disclosure provides several advantages. In fact, it is not necessary for the operator to physically remove the electrical connection (plug of the battery) in order to be able to charge it. Thanks to the dedicated line, the on-board charger is never powered during operation of the machine. Any damage during the working phase does not pose a risk to the operator. In the event of an error and/or damage to the charger, when a charging attempt is made, the logic recognises a risky situation and it is therefore able to isolate the problem by not giving consent to close the charging line. In the case of an on-board charger, the logic takes charge of enabling the display of the charger state and of the possible presence of charger errors.

## Claims

1. An electrically powered industrial truck (10) comprising an electrical energy storage system (11), operative means (13) which can be powered by the energy storage system (11) and control means (12);
said industrial truck including a first power-supply line (14) which connects the energy storage system (11) and the operative means (13), wherein a first switch (16) is inserted on the first power-supply line (14) to cut off or enable the supplying of electrical energy to the operative means (13) under the control of the control means (12);
said industrial truck comprising a second power-supply line (15) which connects the energy storage system (11) to a charging connector (18) for connection with a charging plug (19), wherein a second switch (17) is inserted on the second power-supply line (15) to cut off or enable the supplying of electrical energy from the charging connector (18) to the energy storage system (11) under the control of the control means (12).

2. An industrial truck (10) according to claim 1, wherein the energy storage system (11) is integrated in the industrial truck irremovably from the industrial truck.

3. An industrial truck (10) according to one or more of the preceding claims, further comprising an on-board charging device (20) inserted on the second power-supply line (15), said on-board charging device (20) being configured to convert a mains voltage into a voltage that can be applied to the energy storage system (11) to charge it.

4. An industrial truck (10) according to claim 3, comprising a bus to which the on-board charger (20) and the control means (12) are connected.

5. An industrial truck (10) according to one or more of the preceding claims, wherein the control means (12) are configured to establish whether the industrial truck is in a charging state or not, said control means (12) further being configured to move the first switch (16) to a closing condition and the second switch (17) to an opening condition when they establish that the industrial truck is not in a charging state.

6. An industrial truck (10) according to one or more of the preceding claims, further comprising a sensor configured to detect a positioning of the charging plug (19) coupled to the charging connector (18), wherein said control means (12) are connected to said sensor and they are configured to establish whether the industrial truck is in a charging state or not based on a signal received by the sensor, said control means (12) being further configured to put the first switch (16) into a closing state and the second switch (17) into an opening state when they establish that the industrial truck is not in a charging state.

7. An industrial truck (10) according to claim 4, wherein the control means (12) are configured to detect the presence of the on-board charger on the bus when the on-board charger is energised through energy coming from the charging connector (18), wherein said control means (12) are configured to establish whether the industrial truck is in a charging state or not by detecting the presence of the on-board charger on the bus, said control means (12) being further configured to put the first switch (16) into a closing state and the second switch (17) into an opening state when they establish that the industrial truck is in a charging state.

8. An industrial truck (10) according to claims 6 and 7, wherein the control means (12) are configured to determine that the on-board charger (20) has a malfunction if the sensor detects the coupling of the charging plug (19) in the charging connector (18) and the on-board charger (20) is not detected as present on the bus.

9. An industrial truck (10) according to claim 6, **characterised in that** it can be recharged using an external charger configured to convert a mains voltage into a voltage that can be applied to the energy storage system (11) to charge it, wherein the external charger can be connected using the coupling of the charging plug (19) in the charging connector (18) to an on board machine bus to which the control means (12) are connected, wherein the control means (12) are configured to determine that the external charger has a malfunction if the sensor detects the coupling of the charging plug (19) in the charging connector (18) and the external charger is not detected as present on the bus.

10. An industrial truck (10) according to one or more of the preceding claims, wherein the operative means (13) include one or more of: a drive system for the industrial truck and a system for handling a load.
